# EUROPEAN PATENT SPECIFICATION

(11) **EP 4 286 822 B1**
(45) Date of publication and mention of the grant of the patent: **04.03.2026**
(21) Application number: 23175886.3
(22) Date of filing: 29.05.2023
(51) Int. Cl.: G01M 7/00, G01M 99/00, B65B 57/00, G05B 23/02, B65B 3/00, B65B 9/20, B65B 55/02, B65B 61/24

(54) **VIRTUAL SENSING SYSTEM FOR CONDITION MONITORING OF A CONTAINER PACKAGING MACHINE**
VIRTUELLES SENSORSYSTEM ZUR ZUSTANDSÜBERWACHUNG EINER BEHÄLTERVERPACKUNGSMASCHINE
SYSTÈME DE DÉTECTION VIRTUELLE POUR LA SURVEILLANCE DE L'ÉTAT D'UNE MACHINE D'EMBALLAGE DE RÉCIPIENTS

(30) Priority: 02.06.2022 EP 22176906
(43) Date of publication of application: 06.12.2023
(73) Proprietor: Tetra Laval Holdings & Finance S.A., 1009 Pully (CH)
(72) Inventor: CAMPO, Federico, 41123 Modena (IT); CAPELLI, Luca, 41123 Modena (IT); CAVALAGLIO CAMARGO MOLANO, Jacopo, 41123 Modena (IT)
(74) Representative: Tetra Pak Patent Attorneys

(56) References cited:
- EP-A1- 3 779 394
- EP-A1- 3 974 131
- WO-A1-2022/040617
- US-A1- 2008 269 923
- US-A1- 2020 379 454

## Description

### Technical Field

The present invention relates to a virtual sensing system for condition monitoring of a container packaging machine, in particular for the production of composite packages filled with pourable food products.

### Background Art

As is known, many liquid, semi-liquid or pourable food products, such as fruit juice, UHT (ultra-high-temperature treated) milk, wine, tomato sauce, etc., are distributed and marketed in composite packages made of a multilayer composite packaging material. A typical example is the parallelepiped-shaped package for pourable food products known as Tetra Brik Aseptic^{™}, which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product. Composite packages of this sort are normally produced within fully automatic packaging lines (or plants), which form the composite packages starting from a web of multilayer composite packaging material and fill the composite packages with the pourable food product.

Documents WO2022/040617 A1, EP3974131 A1 and US2020/379454 A1 may be of interest for the present disclosure.

A typical packaging line comprises at least a filling machine, which forms the
composite packages starting from the multilayer composite packaging material and fills the composite packages with the pourable food product. Additionally, the packaging line may also comprise upstream and/or downstream further container packaging machines. The downstream packaging machines may for example comprise one or more of a buffer unit for temporarily buffering the composite packages; an application unit for applying straws or other elements on the composite packages; a grouping unit, e.g. a palletizer unit, for grouping a plurality of composite packages together in a storing unit (such as a pallet).

As is known, it is important to monitor the condition of the container packaging machines and related components, in order to assess their current operating status and possible anomalies of related parts and components and also to predict the occurrence of failures or damages.

Condition monitoring is usually implemented installing suitable monitoring sensors within the packaging machines, acquiring corresponding detection signals and processing the same detection signals with suitable evaluation and prediction algorithms, configured to provide an indication of the current and predicted operating status of the same packaging machines. For example, document EP 3 779 304 A1 discloses a method and device for the condition monitoring of a packaging machine which is operating to produce packages of liquid food that use data acquired from a plurality of vibration sensors in the packaging machine. Document US 2008/0269923 A1 discloses a system for the condition monitoring of a packaging machine that uses information from one or more sensors measuring signals corresponding to torques of servo-motors of the packaging machine.

In particular, vibration analysis constitutes a relevant part of such condition monitoring. Vibration analysis is designed to monitor levels and patterns of vibration signals within the packaging machines, to detect abnormal vibration events in key parts (such as bearings, gears, servomotors, etc.) and to evaluate the overall condition of the same machines. Vibration analysis allows for example to achieve real-time reaction to change of conditions, remote condition monitoring and predictive maintenance.

Vibration sensors, more in particular accelerometer sensors, are therefore coupled to the key parts of the packaging machines, to monitor the corresponding operations. For example, vibration sensors are coupled to servomotors, by means of supporting flanges, to provide detection signals indicative of the vibrations occurring, during operation, at the same servomotors.

Installation and maintenance of the condition monitoring sensors in the packaging machines is, however, costly and time consuming. Moreover, there may be places in the packaging machines where installation of monitoring sensors is difficult or not possible (for example, parts of the machine may have accessibility problems or may operate in a harsh environment, not suited for installation of the monitoring sensors).

In such cases, traditional monitoring of the operating condition of the corresponding parts of the packaging machines may not be possible or in any case difficult to achieve with a desired level of reliability and accuracy.

### Summary

It is an object of the present disclosure to provide an improved solution allowing to overcome, at least in part, the above-mentioned issues of known condition monitoring solutions.

According to the present disclosure, a virtual sensing system for condition monitoring of a container packaging machine is therefore provided, as defined in the appended claims.

According to a second aspect, it is provided a method for monitoring the condition of a container packaging machine, as defined in the appended claims.

According to a third aspect, it is provided a computer program product comprising instructions which, when the program is executed by a computing unit, cause the computing unit to carry out the method.

### Brief description of the Drawings

A non-limiting embodiment of the present invention will be described by way of example with reference to the accompanying drawings, in which:
- Figure 1 shows a schematic block diagram of a virtual sensing system for condition monitoring of a packaging machine in a packaging line, according to an embodiment of the present solution;
- Figure 2 is a schematic diagram related to the virtual sensing system of Figure 1;
- Figure 3 is a diagram depicting a continual learning architecture of an artificial intelligence module in the virtual sensing system of Figure 1;
- Figure 4 is a diagram depicting a training pipeline for the artificial intelligence module in the virtual sensing system of Figure 1; and
- Figure 5 is a schematic block diagram of a possible implementation of the artificial intelligence module in the virtual sensing system of Figure 1.

### Detailed Description

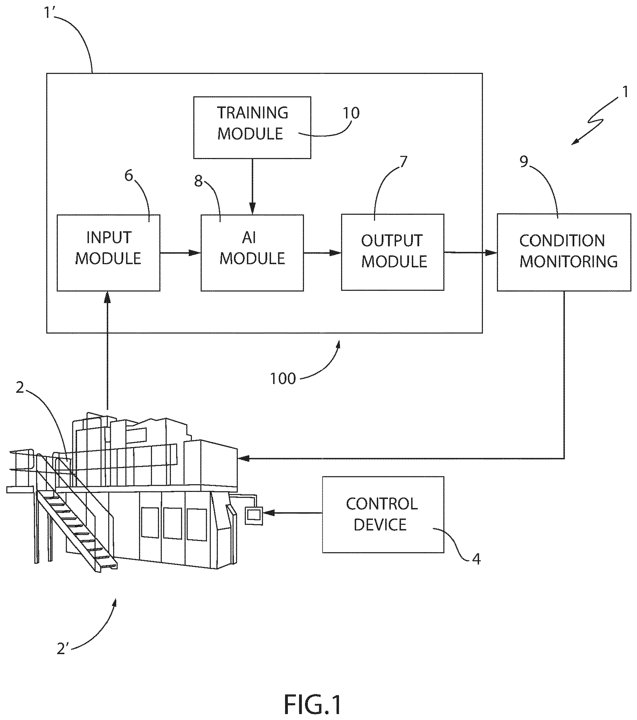

Figure 1 shows a schematic block diagram of a computer implemented virtual sensing system, denoted in general with 1, for monitoring the operation of a container packaging machine 2 configured to produce packaging containers, in particular composite packages formed from a multilayer composite packaging material, filled with a pourable product, in particular a food product such as milk, cream, fruit juice, wine, tomato sauce, sugar, salt, emulsions, solutions containing solid particles (e.g. legumes), etc.

The container packaging machine 2 is part of a container packaging line 2', including further processing machines (here not shown); the container packaging machine 2 is, for example, a filling machine.

Multilayer composite packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of the packaging containers eventually contacting the pourable food product packaged within the same packaging containers.

Multilayer composite packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, multilayer composite packaging material may also comprise a further layer of heat-seal plastic material being interposed between the layer of gas- and light-barrier material and the layer of fibrous material.

Each packaging container may extend along a longitudinal axis, having a longitudinal seam portion (extending along the respective longitudinal axis) and a pair of transversal sealing bands, in particular a transversal top sealing band and a transversal bottom sealing band. In particular, each packaging containers may have a substantially parallelepiped structure.

Furthermore, packaging containers may comprise at least two transversal walls (being transversal to the respective longitudinal axis) and being disposed at opposite sides of packaging containers and a plurality of lateral walls extending between the transversal walls.

More specifically, one respective transversal wall of each packaging containers may define a bottom wall and the other respective transversal wall may define a top wall. In particular, the bottom wall may define a support surface adapted to be placed on a (horizontal) plane, such as e.g. a shelf within a distribution point, and the top wall is opposed to the bottom wall.

In a manner not shown in details, the container packaging machine 2 may comprise at least:
- a conveying device for advancing a web of multilayer packaging material along an advancement path;
- a tube forming device for forming a tube from the advancing web of multilayer packaging material;
- a sealing device for longitudinally sealing the tube;
- a filling device, coupled to the inlet duct, for filling the tube with the pourable food product; and
- a package forming unit for forming the tube and to transversally seal the tube for forming composite packages from the tube filled with the pourable food product.

In more details, the package forming unit may comprise at least:
- a forming device configured to form, transversally seal and transversally cut the tube for obtaining composite packages, in particular pillow packages; and
- a final folder configured to receive the composite packages from the forming device and to form packaging containers from the composite packages, in particular the pillow packages.

The container packaging machine 2 further comprises a control device 4 for controlling packaging operations; the control device 4 for example includes a PLC (Programmable Logic Controller) unit or any suitable processing and computing unit, configured to execute a computer program designed to control the operations of the same container packaging machine 2.

According to an aspect of the present solution, the virtual sensing system 1 is configured to reconstruct a condition monitoring target signal that is a a vibration signal, useful for condition monitoring of the container packaging machine 2, by means of a data fusion of other signals, measurements, parameters and/or information (in general denoted as input data) available from the same environment of the target signal, i.e. from the same container packaging machine 2.

The virtual sensing system 1 is configured to learn how to interpret the relationships between the input data and to combine them so that the target signal can be reconstructed with enough accuracy to replace a real physical sensor, in particular a vibration sensor (e.g. an accelerometer sensor), which may therefore not be present in the container packaging machine 2 for purposes of its condition monitoring.

In more details, the virtual sensing system 1 is implemented in a processing computing unit 1' and comprises:
an input module 6, configured to receive from the container packaging machine 2 input data that are indicative of (or associated with) the target condition monitoring signal that is to be reconstructed;
an artificial intelligence (AI) module 8, which is configured to implement a suitable neural network algorithm, in particular having a recurrent nature, in order to generate an output condition monitoring signal, being an accurate approximation of the target condition monitoring signal, based on the input data received from the input module 6; and
an output module 7, which is configured to provide the output condition monitoring signal generated by the Al module 8, for further processing thereof by a condition monitoring module 9, designed to assess an actual condition and/or to predict a future condition of the container packaging machine 2 based on the same output condition monitoring signal. That is, the virtual sensing system 1 comprises the condition monitoring unit 9.

The condition monitoring module 9 may be implemented in the same processing computing unit 1' and be configured to implement a condition monitoring of the container packaging machine 2 and, in general, of the container packaging line 2'. For example, the processing computing unit 1' may be configured to implement a vibration analysis in case the output condition monitoring signal is configured to reconstruct a target vibration signal.

In a possible embodiment, the virtual sensing system 1 is implemented remotely from the container packaging machine 2, in a central processing unit 100 (including in this case the processing computing unit 1') located in a remote server (e.g. in the "cloud"), where operating data and information relating to the container packaging line 2' are received and processed for control and management of its operation.

In another possible embodiment, the virtual sensing system 1 may be implemented locally, at the container packaging machine 2, for example in the control device 4 of the same container packaging machine 2.

Virtualization of real monitoring sensors implemented by the virtual sensing system 1 has a number of advantages, among which:
reducing the number of physical sensors in the field, and consequently the costs of installation and maintenance;
virtual sensorization of critical points where the installation of real sensors would be very difficult or even not feasible, for example in very small components or moving parts, where the only other possible solution would be to install expensive wireless sensors;
improving anomaly detection for on-site fault monitoring solutions, with the possibility to detect new anomalies that cannot be detected with current condition monitoring techniques, by collecting data and adapting the neural network algorithm implemented by the Al module 8 to those specific anomalies.

In order to accurately replace physical monitoring sensors in the container packaging machine 2, the Al module 8 in the virtual sensing system 1 has to be properly trained, based on a suitable collection of input data, allowing to train the neural network algorithm; for example, weights of the neural network may be adjusted through the training process.

As shown in Figure 1, such training is implemented by a training module 10, which may be included in the above discussed processing computing unit 1' and/or central processing unit 100 (or may be external thereto).

Training may be implemented referring to a number of training container packaging machines 2 where physical monitoring sensors are (at least initially) retained for purposes of comparing the corresponding detection signals with the output condition monitoring signals generated by the Al module 8 and adjusting accordingly the weights (in general, the parameters) of the neural network implemented in the same Al module 8.

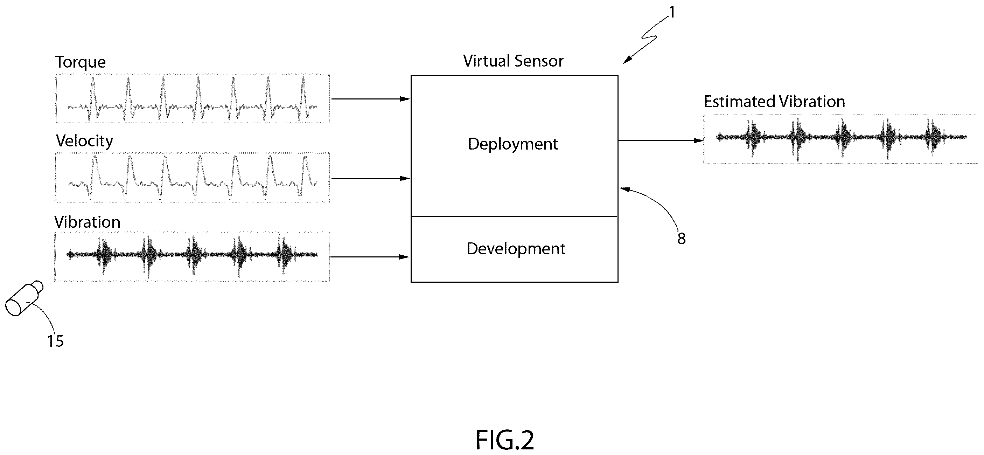

As schematically shown in Figure 2, during training or "development" of the Al module 8 of the virtual sensing system 1 (here denoted as "virtual sensor"), the input module 6 receives both the target condition monitoring signals, in this case actual vibration signals provided by physical, real sensors 15, in this case accelerometers; and the above discussed input data indicative of the target condition monitoring signals that are to be reconstructed.

According to the claimed invention, the physical monitoring sensors to be removed from the container packaging machine 2 are vibration sensors coupled to machine servomotors (e.g. rotary servomotors configured to drive jaws designed to cut tubes for obtaining the composite packages), the input data comprises operating signals associated with the same servomotors, such as torque and velocity signals, which are detected by suitable sensors coupled to the servomotors.

In order to have a larger pool of input data, first and second derivatives of the same torque and velocity signals can also be considered.

During the development phase, the output condition monitoring signals provided by the virtual sensing system 1 are compared to the target condition monitoring signals; the parameters of the Al module 8 (e.g. the weights of the corresponding neural network) are then adjusted based on a comparison (e.g. a difference) between the same output condition monitoring signals and target condition monitoring signals.

After suitable training of the Al module 8, deployment of the virtual sensing system 1 may be carried out, for condition monitoring of container packaging machines 2 in the field, where the physical sensors 15 are no longer installed or used (in other words, the container packaging machines 2 are without the physical sensors 15 used for condition monitoring purposes). The vibration signal is now estimated by the virtual sensing system 1, which provides the output condition monitoring signals generated by the Al module 8.

It is noted that the development phase of the Al module 8 may be carried out considering a selected number of training container packaging machines 2, e.g. a number of machines at the premises of a corresponding manufacturer company. In this case, the container packaging machines 2 installed at the premises of customers may thus be, at least in the above discussed deployment phase, without the physical sensors 15 used for condition monitoring purposes.

As an alternative, a selected number of the container packaging machines 2 provided to selected customers could also be involved in the development of the Al module 8, as training container packaging machines.

According to an aspect of the present solution, a continual learning approach is implemented by the training module 10, for training of the Al module 8 of the virtual sensing system 1.

Continual machine learning, also denoted as continuous or on-line learning, is a machine learning approach according to which Al models continuously learn and evolve based on increasing amounts of input data, while retaining previously learned knowledge. Accordingly, this approach provides an Al model the ability to autonomously learn and adapt as new and different input data comes in.

In the context of the present solution, continual machine learning applied to the Al module 8 provides for retraining continuously the neural network, progressively adjusting the weights and parameters of the corresponding neural network algorithm, with consecutive and repeated training phases based on different input data. This approach allows to continuously improve the performances of the Al module 8, until when it is considered to be industrially deployable (at which point it will be possible to exploit all the advantages of the virtual sensing solution in the field).

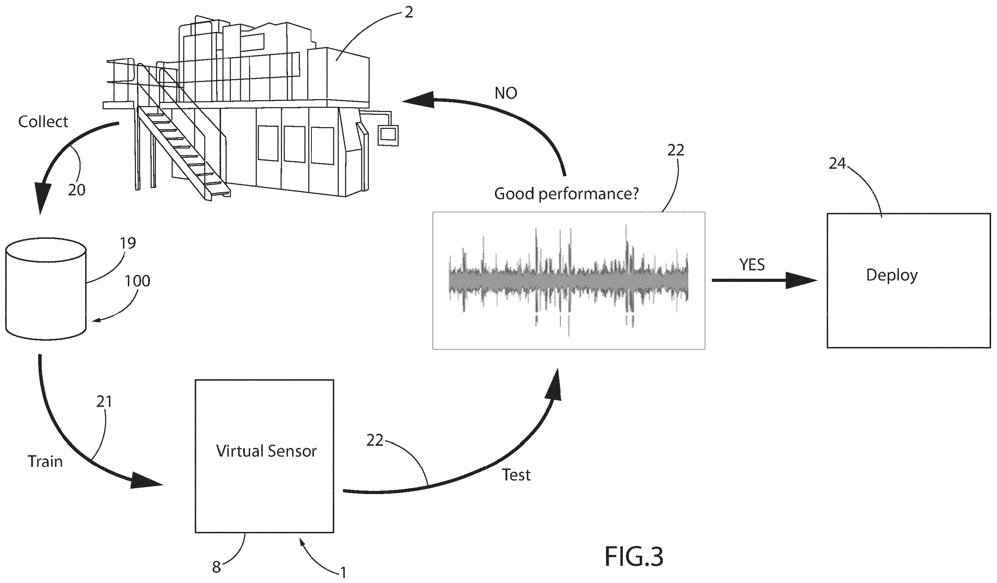

As schematically shown in Figure 3, the continual learning approach provides for the input data collection from the selected training container packaging machines 2, as shown at step 20. It is noted that these training container packaging machines 2 may be training machines at the manufacturer premises and/or in-the-field training machines installed at the premises of customers, having in this case the physical monitoring sensors 15 installed, in order to collect the input data.

All collected data are received, e.g. at the central processing unit 100, and stored in a data storage 19.

The input data are then used for training of the neural network algorithm in the Al module 8 of the virtual sensing system 1 and in particular for adjusting the relevant parameters (e.g. the weights), as shown at step 21.

In this respect, it is noted that monitoring algorithms commonly used in the same central processing unit 100 to monitor operation and performance of the associated container packaging machines 2, such as predictive maintenance models, performance monitoring models, quality control models and process control models may be exploited to provide data labels for the training of the Al module 8, basically selecting the input data on which the virtual sensing system 1 has to be retrained.

The performance of the Al module 8 in the reconstruction of the target condition monitoring signals is then evaluated, with any suitable metrics, comparing the same target condition monitoring signals to the output condition monitoring signals provided by the virtual sensing system 1, as shown at step 22.

If the performance is evaluated as good or satisfactory (e.g. meeting, or being above, a certain quality threshold), the virtual sensing system 1 is considered to be ready for deployment in the field, as shown at step 24, so that the same virtual sensing system 1 is used for condition monitoring of container packaging machines 2 in the field, which have no physical or real condition monitoring sensors on-board (or whose physical sensors are no more used for this purpose).

As shown in the same Figure 3, training of the Al module 8 is continued, with further collection of input data and further possible adjustments of the parameters of the same Al module 8. This continuous training may allow for example to adjust to any possible changes or modifications occurring in the container packaging machines 2.

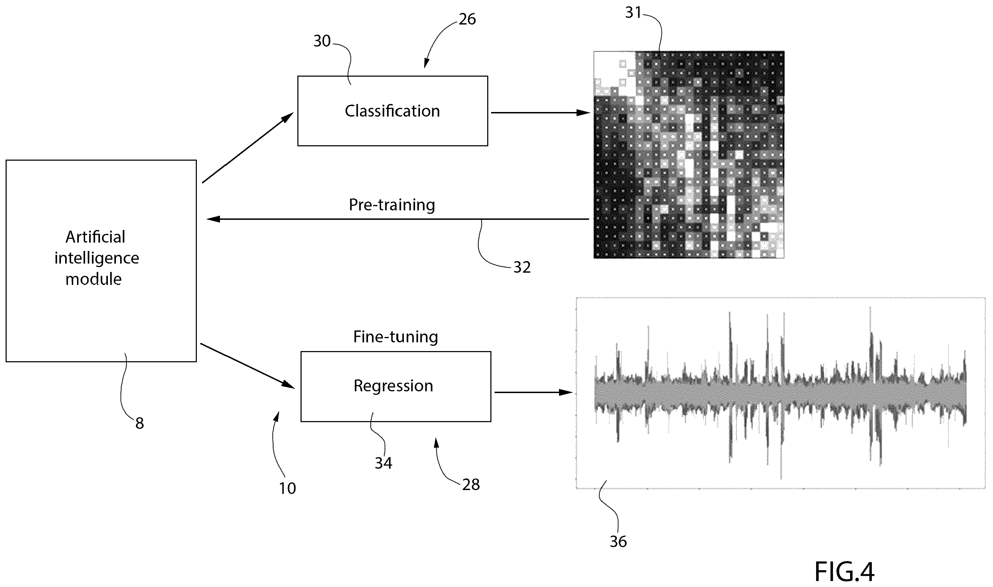

A further aspect of the present solution is now discussed, with reference to Figure 4, regarding a particular training pipeline for the Al module 8 of the virtual sensing system 1, which may be implemented by the training module 10.

In particular, it is first noted that the Al module 8, when deployed to reconstruct an approximation of the target condition monitoring signals, is configured to implement a regression algorithm, so as to output actual estimated values of the same signals.

The present Applicant has found, however, that training the Al module 8 configured as a regressor may not allow to reach the best possible training results.

An aspect of the present solution therefore envisages a training pipeline for the Al module 8, according to which training is split into two consecutive phases:
a first training phase 26 wherein the Al module 8 is configured as classifier, therefore assigning to the input data an output class (which is provided as the output of the Al module 8) among a certain number of classes; and
a second training phase 28 wherein the same Al module 8 is actually configured as a regressor, providing actual output values for the reconstructed signals.

In more details, as show in Figure 4, in the first training phase 26 of the pipeline, the Al module 8 is configured to implement a classification algorithm (of any suitable nature, depending on the circumstances), as shown in step 30, providing classification results.

The results of the classification are then used to adjust the parameters of the Al module 8, e.g. measuring performances of the neural network via a confusion matrix, as schematically shown in step 31, in particular to set the weights of the neural network, as shown in step 32.

This constitutes a pre-training stage of the Al module 8, which is followed by the second training phase 28 of the pipeline, wherein the Al module 8 is configured to implement a regression algorithm (again of any suitable nature).

In this second training phase, as shown in step 34, the Al module 8 is subject to a fine-tuning, in order to reconstruct with a high accuracy the actual values of the target condition monitoring signals. Thanks to the parameters (e.g. weights) that have been previously set by the classifier in the first training phase, training of the Al module 8 in this second training phase is facilitated and provides more accurate results.

In particular, as schematically shown at step 36, the output condition monitoring signals provided by the trained virtual sensing system 1 closely match the target condition monitoring signals.

According to a possible embodiment, the Al module 8 is configured to implement a recurrent neural network algorithm, in particular a LSTM (Long Short Term Memory) algorithm, for the reconstruction of the target condition monitoring signals.

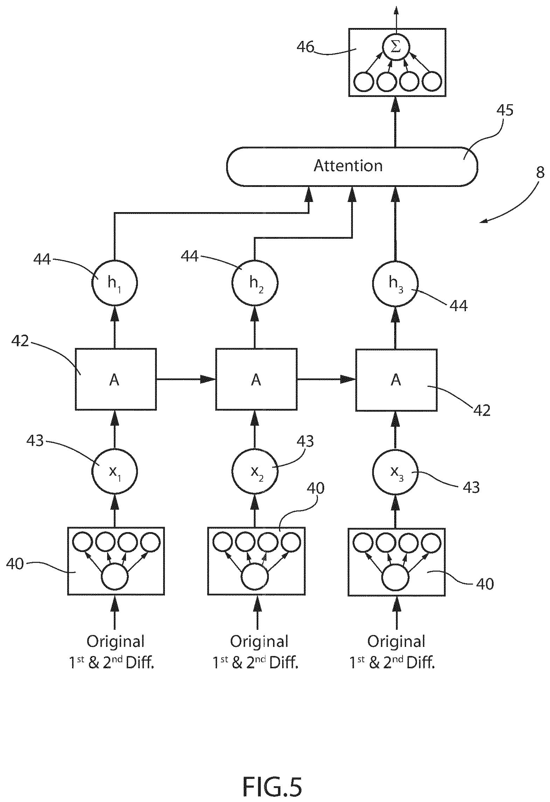

As schematically shown in Figure 5, the Al module 8 comprises a number (in the example three) of input stages 40, each receiving respective input data (in the example, the torque and velocity signals and their first and second differentials).

The Al module 8 further comprises a number (in the example three) of neural network cells or stages 42, each one receiving, via respective input weighting blocks 43, respective input data from a corresponding input stage 40 and, according to a recurrent architecture, also the output of a previous cell.

The output of the various neural network cells 42 is provided, via respective output weighting blocks 44 to an attention stage 45, implementing a suitable attention algorithm to attribute less or more importance to (i.e. to focus on) one or more of the outputs received from the neural network cells 42 in the recurrent architecture.

The Al module 8 moreover comprises an output stage 46, following the attention stage 45, configured to provide the reconstructed values of the output condition monitoring signals.

The Applicant has found that the use of a recurrent neural network algorithm, in particular of a LSTM (Long Short Term Memory) algorithm, for the reconstruction of the target condition monitoring signals is particularly advantageous, providing more accurate and reliable results in the signal reconstruction.

The advantages of the discussed solution will be clear from the foregoing description.

In any case, it is again underlined that the discussed solution allows to: reduce the number of real sensors deployed in the field, and consequently the associated costs of installation and maintenance; virtual sensorization of critical points where the installation of real sensors would be very difficult or not feasible; improve anomaly detection for on-site fault monitoring.

In particular, use of the discussed continual learning approach for training and development of the artificial intelligence module in the virtual sensing system allows to continuously improve the performance of the signal reconstruction, thanks to the progressively larger input data pool, until the same virtual sensing system is ready for deployment in an industrial environment.

The same continual learning approach, with training being repeated over time, may allow to adjust to changes in the container packaging machines and, in their operations, e.g. to changes of materials, production parameters and so on.

The discussed training pipeline, with the two distinct and consecutive training phases, with the Al module trained first as a classifier and then as a regressor, proves to be advantageous in improving the performances of the signal reconstruction.

Moreover, use of a recurrent neural network architecture allows to further improve the performance of signal reconstruction in the virtual sensing system.

Clearly, changes may be made to what described herein without, however, departing from the scope of protection as defined in the accompanying claims.

In particular, it is underlined that the Al module 8 in the virtual sensing system 1 could implement different types of neural network algorithms, suitable for reconstruction of the target condition monitoring signals.

Other types of target condition monitoring signals could also be reconstructed by the virtual sensing system 1 (in addition of the above discussed vibration signals); moreover, the input data could include further signals and/or further order derivatives of the same signals.

It is also underlined that the discussed solution may be applied for any packaging line 2', including any packaging machine 2, and for any kind of pourable food product.

The systems and methods disclosed herein can be implemented as software, firmware, hardware or a combination thereof. In a hardware implementation, the division of tasks between functional units or modules referred to in the above description does not necessarily correspond to the division into physical units; on the contrary, one physical module can perform multiple functionalities, and one task may be carried out by several physical modules in collaboration.

Certain modules or all modules may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer.

The target condition monitoring signal is a vibration signal. Advantageously, the system can replace a physical vibration sensor, which may not be present in the container packaging machine (2) for condition monitoring purposes, for example due to the presence of a harsh environment or for physical constrictions.

The target monitoring signal is a vibration signal associated with a servomotor in the container packaging machine 2. It will be appreciated that the Al module may be configured to generate a number of output condition monitoring signals being a reconstruction of a number of target condition monitoring signals corresponding to vibration signals associated to a number of servomotors.

The input data may comprise a number of operating signals associated with components of the packaging machine 2 causing vibrations, e.g. servomotors. Such operating signals may include torque and/or velocity signals, and optionally corresponding derivatives.

The machine learning algorithm may be trained based on a training dataset comprising reference input data, indicative of a reference target condition monitoring signal that is to be reconstructed, and the reference target condition monitoring signal. The input data may be collected simultaneously with respect to the reference target condition monitoring signal. That is, the acquired input data may be indicative of the acquired target condition monitoring signal.

The container packaging machine 2 may be operated during a training phase to collect the reference input data and the reference target condition monitoring signal. The container packaging machine 2 may be the same previously disclosed and/or a different packaging machine 2.

One or more embodiments may relate to a method for monitoring the condition of a container packaging machine (2) for packaging containers filled with a pourable food product, the method comprising reconstructing a target condition monitoring signal, such as a vibration signal e.g. associated with servomotors in the container packaging machine, based on input data from the container packaging machine (2), such as operating signals associated with a number of servomotors in the container packaging machine (2), preferably the operating signals including torque and velocity signals, even more preferably the operating signals including corresponding derivatives of torque and velocity signals.

The step of reconstructing comprises:
receiving from the container packaging machine (2) the input data that are indicative of the target condition monitoring signal that is to be reconstructed; and
implementing a machine learning algorithm to generate an output condition monitoring signal, being a reconstruction of the target condition monitoring signal, based on the input data; and
providing the output condition monitoring signal generated by the Al module (8),
processing said output condition monitoring signal to assess and/or to predict a condition of the container packaging machine (2) based on the output condition monitoring signal.

The method may comprise exploiting algorithms designed to monitor operation and/or performance of the training container packaging machines (2) as a function of the input data, including one or more of predictive maintenance models, performance monitoring models, quality control models and process control models, to provide data labels for the training of the Al module (8).

One or more embodiments may relate to a method of training the Al module 8 and the machine learning algorithm previously described, the method comprising:
- acquiring input data from a container packaging machine 2, e.g. a reference packaging machine 2 or the same packaging machine previously disclosed used during normal operation,
- acquiring a condition monitoring signal from a physical condition monitoring sensor (15) positioned at the container packaging machine (2);
- training the Al module 8 and the machine learning algorithm based on the input data and the condition monitoring signal.

The method may comprise implementing a training pipeline for training of the Al module (8), according to which training is split into two consecutive phases:
a first training phase, wherein the Al module (8) is configured as a classifier; and
a second training phase, wherein the Al module (8) is configured as a regressor, providing actual output values for the reconstructed signals.

The method may comprise:
- in the first training phase of the pipeline, implementing a classification algorithm, providing classification results that are used to adjust parameters of the machine learning algorithm, in a pre-training stage of the Al module (8),
- in the second training phase of the pipeline, implementing a regression algorithm for fine-tuning of the parameters of the machine learning algorithm.

One or more embodiments may relate to a method of validating the Al module 8 and the machine learning algorithm as previously described, the method comprising evaluating the performance of the machine learning algorithm by checking whether a condition monitoring signal from a condition monitoring sensor substantially corresponds to the output condition monitoring signal generated by the Al module (8).

During validation of the machine learning algorithm, a physical signal acquired, i.e. the condition monitoring signal from a condition monitoring sensor, may be compared with the output condition monitoring signal generated by the Al module. If the output condition monitoring signal differs more than a predetermined threshold value for a predetermined period of time, the machine learning algorithm may be retrained.

One or more embodiments may also relate to a computer program product comprising instructions which, when the program is executed by a computing unit, cause the computing unit to carry out at least one between the method for monitoring the condition of a container packaging machine, the method for training the Al module 8 and the machine learning algorithm and/or the method for validating the Al module 8 and the machine learning algorithm.

## Claims

1. A virtual sensing system (1) for monitoring the condition of a container packaging machine (2) for packaging containers filled with a pourable food product, the system (1) being configured to reconstruct a target condition monitoring signal based on input data from the container packaging machine (2) and comprising:
an input module (6), configured to receive from the container packaging machine (2) the input data, being indicative of the target condition monitoring signal that is to be reconstructed;
an artificial intelligence - AI - module (8), configured to implement a machine-learning algorithm to generate an output condition monitoring signal, being a reconstruction of the target condition monitoring signal, wherein the target monitoring signal is a vibration signal associated with a servomotor in the container packaging machine (2), based on the input data, wherein the input data comprise a number of operating signals associated with a number of servomotors in the container packaging machine (2);
an output module (7), configured to provide the output condition monitoring signal generated by the Al module (8), and
a condition monitoring module (9), designed to assess and/or predict a condition of the container packaging machine (2) based on the output condition monitoring signal.

2. The system according to claim 1, wherein the machine learning algorithm has been trained based on a training dataset comprising reference input data, indicative of a reference target condition monitoring signal that is to be reconstructed, and the reference target condition monitoring signal.

3. The system according to any of claims 1 or 2, further comprising a training module (10), operatively coupled to the Al module (8) and configured to train the Al module (8) based on a continual learning approach.

4. The system according to any of the previous claims, wherein the Al module (8) is a neural network comprising: a number of neural network cells (42), each one receiving respective input data and arranged according to a recurrent architecture; and an attention stage (45), implementing an attention algorithm on outputs received from the neural network cells (42) to provide reconstructed values of the output condition monitoring signals.

5. The system according to any of the preceding claims, wherein the number of operating signals includes torque and/or velocity signals, preferably the number of operating signals includes corresponding derivatives of torque and velocity signals.

6. The system according to any of the preceding claims, wherein the Al module (8) is included in a central processing unit (100) located in a remote server, remotely from the container packaging machine (2).

7. A packaging line (2'), comprising the virtual sensing system (1), according to any of the preceding claims.

8. A computer-implemented method for monitoring the condition of a container packaging machine (2) for packaging containers filled with a pourable food product, the method comprising reconstructing a target condition monitoring signal, the target condition monitoring signal being a vibration signal associated with servomotors in the container packaging machine (2), based on input data from the container packaging machine (2), the input data comprising operating signals associated with the servomotors in the container packaging machine (2); wherein reconstructing comprises:
receiving from the container packaging machine (2) the input data that are indicative of the target condition monitoring signal that is to be reconstructed; and
implementing a machine learning algorithm to generate an output condition monitoring signal, being a reconstruction of the target condition monitoring signal, based on the input data; and
providing the output condition monitoring signal generated by the Al module (8),
processing said output condition monitoring signal to assess and/or to predict a condition of the container packaging machine (2) based on the output condition monitoring signal.

9. The method according to claim 8, comprising:
- acquiring input data from the container packaging machine (2),
- acquiring a condition monitoring signal from a physical condition monitoring sensor (15) positioned at the container packaging machine (2); and
- training the Al module (8) based on the input data and the condition monitoring signal.

10. The method according to claim 8 or claim 9, comprising implementing a training pipeline for training of the Al module (8), according to which training is split into two consecutive phases:
a first training phase, wherein the Al module (8) is configured as a classifier; and
a second training phase, wherein the Al module (8) is configured as a regressor, providing actual output values for the reconstructed signals.

11. The method according to claim 10, comprising:
- in the first training phase of the pipeline, implementing a classification algorithm, providing classification results that are used to adjust parameters of the machine learning algorithm, in a pre-training stage of the Al module (8),
- in the second training phase of the pipeline, implementing a regression algorithm for fine-tuning of the parameters of the machine learning algorithm.

12. The method according to any of claims 8 to 11, comprising evaluating the performance of the machine learning algorithm by checking whether a condition monitoring signal from a condition monitoring sensor substantially corresponds to the output condition monitoring signal generated by the Al module (8).

13. The method according to any of claims 8 to 12, comprising exploiting algorithms designed to monitor operation and/or performance of the training container packaging machines (2) as a function of the input data, including one or more of predictive maintenance models, performance monitoring models, quality control models and process control models, to provide data labels for the training of the Al module (8).

14. A computer program product comprising instructions which, when the program is executed by a computing unit, cause the computing unit to carry out the method of any of claims 8 to 13.

## Patentansprüche

1. Virtuelles Erfassungssystem (1) zum Überwachen des Zustands einer Behälterverpackungsmaschine (2) zum Verpacken von Behältern, die mit einem gießfähigen Lebensmittelprodukt gefüllt sind, wobei das System (1) konfiguriert ist, ein Zielzustandsüberwachungssignal basierend auf Eingangsdaten von der Behälterverpackungsmaschine (2) zu rekonstruieren, und umfassend:
ein Eingangsmodul (6), das konfiguriert ist, von der Behälterverpackungsmaschine (2) die Eingangsdaten zu empfangen, die das zu rekonstruierende Zielzustandsüberwachungssignal angeben;
ein Künstliche-Intelligenz- bzw. KI-Modul (8), das konfiguriert ist, einen Maschinenlernalgorithmus zu implementieren, um ein Ausgangszustandsüberwachungssignal, das eine Rekonstruktion des Zielzustandsüberwachungssignals ist, wobei das Zielüberwachungssignal ein Vibrationssignal ist, das mit einem Servomotor in der Behälterverpackungsmaschine (2) assoziiert ist, basierend auf den Eingangsdaten zu erzeugen, wobei die Eingangsdaten eine Anzahl von Betriebssignalen umfassen, die mit einer Anzahl von Servomotoren in der Behälterverpackungsmaschine (2) assoziiert sind;
ein Ausgangsmodul (7), das konfiguriert ist, das Ausgangszustandsüberwachungssignal bereitzustellen, das durch das KI-Modul (8) erzeugt wird, und
ein Zustandsüberwachungsmodul (9), das dazu konzipiert ist, einen Zustand der Behälterverpackungsmaschine (2) basierend auf dem Ausgangszustandsüberwachungssignal zu beurteilen und/oder vorherzusagen.

2. System nach Anspruch 1, wobei der Maschinenlernalgorithmus basierend auf einem Trainingsdatensatz, der Referenzeingangsdaten umfasst, die ein zu rekonstruierendes Referenzzielzustandsüberwachungssignal angeben, und dem Referenzzielzustandsüberwachungssignal trainiert wurde.

3. System nach einem der Ansprüche 1 oder 2, ferner umfassend ein Trainingsmodul (10), das operativ mit dem KI-Modul (8) gekoppelt ist und konfiguriert ist, das KI-Modul (8) basierend auf einem kontinuierlichen Lernansatz zu trainieren.

4. System nach einem der vorstehenden Ansprüche, wobei das KI-Modul (8) ein neuronales Netzwerk ist, das umfasst: eine Anzahl neuronaler Netzwerkzellen (42), die jeweils jeweilige Eingangsdaten empfangen und gemäß einer rekurrenten Architektur angeordnet sind; und eine Attention-Stufe (45), die einen Attention-Algorithmus an Ausgängen implementiert, die von den neuronalen Netzwerkzellen (42) empfangen werden, um rekonstruierte Werte der Ausgangszustandsüberwachungssignale bereitzustellen.

5. System nach einem der vorstehenden Ansprüche, wobei die Anzahl von Betriebssignalen Drehmoment- und/oder Geschwindigkeitssignale beinhaltet, vorzugsweise die Anzahl von Betriebssignalen entsprechende Ableitungen von Drehmoment- und Geschwindigkeitssignalen beinhaltet.

6. System nach einem der vorstehenden Ansprüche, wobei das KI-Modul (8) in einer Zentralverarbeitungseinheit (100) eingeschlossen ist, die sich in einem Fernserver entfernt von der Behälterverpackungsmaschine (2) befindet.

7. Verpackungslinie (2'), die das virtuelle Erfassungssystem (1) nach einem der vorstehenden Ansprüche umfasst.

8. Computerimplementiertes Verfahren zum Überwachen des Zustands einer Behälterverpackungsmaschine (2) zum Verpacken von Behältern, die mit einem gießbaren Lebensmittelprodukt gefüllt sind, wobei das Verfahren umfasst: Rekonstruieren eines Zielzustandsüberwachungssignals, wobei das Zielzustandsüberwachungssignal ein Vibrationssignal ist, das mit Servomotoren in der Behälterverpackungsmaschine (2) assoziiert ist, basierend auf Eingangsdaten von der Behälterverpackungsmaschine (2), wobei die Eingangsdaten Betriebssignale umfassen, die mit den Servomotoren in der Behälterverpackungsmaschine (2) assoziiert sind; wobei das Rekonstruieren umfasst:
Empfangen, von der Behälterverpackungsmaschine (2), der Eingangsdaten, die das zu rekonstruierende Zielzustandsüberwachungssignal angeben; und
Implementieren eines Maschinenlernalgorithmus, um ein Ausgangszustandsüberwachungssignal, das eine Rekonstruktion des Zielzustandsüberwachungssignals ist, basierend auf den Eingangsdaten zu erzeugen; und
Bereitstellen des Ausgangszustandsüberwachungssignals, das durch das KI-Modul (8) erzeugt wird,
Verarbeiten des Ausgangszustandsüberwachungssignals, um einen Zustand der Behälterverpackungsmaschine (2) basierend auf dem Ausgangszustandsüberwachungssignal zu beurteilen und/oder vorherzusagen.

9. Verfahren nach Anspruch 8, umfassend:
- Erfassen von Eingangsdaten von der Behälterverpackungsmaschine (2),
- Erfassen eines Zustandsüberwachungssignals von einem physischen Zustandsüberwachungssensor (15), der an der Behälterverpackungsmaschine (2) positioniert ist; und
- Trainieren des KI-Moduls (8) basierend auf den Eingangsdaten und dem Zustandsüberwachungssignal.

10. Verfahren nach Anspruch 8 oder Anspruch 9, umfassend Implementieren einer Trainings-Pipeline zum Trainieren des KI-Moduls (8), gemäß der das Training in zwei aufeinanderfolgende Phasen aufgeteilt ist:
eine erste Trainingsphase, bei der das KI-Modul (8) als ein Klassifizierer konfiguriert ist; und
eine zweite Trainingsphase, bei der das KI-Modul (8) als ein Regressor konfiguriert ist, der tatsächliche Ausgangswerte für die rekonstruierten Signale bereitstellt.

11. Verfahren nach Anspruch 10, umfassend:
- in der ersten Trainingsphase der Pipeline, Implementieren eines Klassifikationsalgorithmus, der Klassifikationsergebnisse bereitstellt, die zum Anpassen von Parametern des Maschinenlernalgorithmus verwendet werden, in einer Vortrainingsstufe des KI-Moduls (8),
- in der zweiten Trainingsphase der Pipeline, Implementieren eines Regressionsalgorithmus zur Feinabstimmung der Parameter des Maschinenlernalgorithmus.

12. Verfahren nach einem der Ansprüche 8 bis 11, umfassend Evaluieren der Leistung des Maschinenlernalgorithmus durch Prüfen, ob ein Zustandsüberwachungssignal von einem Zustandsüberwachungssensor im Wesentlichen dem Ausgangszustandsüberwachungssignal entspricht, das durch das KI-Modul (8) erzeugt wird.

13. Verfahren nach einem der Ansprüche 8 bis 12, umfassend Ausnutzen von Algorithmen, die dazu konzipiert sind, den Betrieb und/oder die Leistung des Trainierens von Behälterverpackungsmaschinen (2) als eine Funktion der Eingangsdaten zu überwachen, einschließlich eines oder mehrerer von prädiktiven Wartungsmodellen, Leistungsüberwachungsmodellen,
Qualitätskontrollmodellen und Prozesskontrollmodellen, um Datenlabel für das Training des KI-Moduls (8) bereitzustellen.

14. Computerprogrammprodukt, das Anweisungen umfasst, die, wenn das Programm durch eine Recheneinheit ausgeführt wird, die Recheneinheit veranlassen, das Verfahren nach einem der Ansprüche 8 bis 13 auszuführen.

## Revendications

1. Système de détection virtuelle (1) destiné à surveiller l'état d'une machine d'emballage de récipients (2) destinée à emballer des récipients remplis d'un produit alimentaire pouvant être versé, le système (1) étant configuré pour reconstruire un signal de surveillance d'état cible sur la base de données d'entrée provenant de la machine d'emballage de récipients (2) et comprenant :
un module d'entrée (6), configuré pour recevoir de la machine d'emballage de récipients (2) les données d'entrée indicatives du signal de surveillance d'état cible qui est à reconstruire ;
un module IA d'intelligence artificielle (8), configuré pour mettre en œuvre un algorithme d'apprentissage automatique pour générer un signal de surveillance d'état de sortie, qui est une reconstruction du signal de surveillance d'état cible, le signal de surveillance cible étant un signal de vibration associé à un servomoteur dans la machine d'emballage de récipients (2), sur la base des données d'entrée, les données d'entrée comprenant un certain nombre de signaux de fonctionnement associés à un certain nombre de servomoteurs dans la machine d'emballage de récipients (2) ;
un module de sortie (7), configuré pour fournir le signal de surveillance d'état de sortie généré par le module IA (8), et
un module de surveillance d'état (9) conçu pour évaluer et/ou prédire un état de la machine d'emballage de récipients (2) sur la base du signal de surveillance d'état de sortie.

2. Système selon la revendication 1, dans lequel l'algorithme d'apprentissage automatique a été entraîné sur la base d'un ensemble de données d'apprentissage comprenant des données d'entrée de référence, indicatives d'un signal de surveillance d'état cible de référence qui doit être reconstruit, et du signal de surveillance d'état cible de référence.

3. Système selon l'une quelconque des revendications 1 ou 2, comprenant en outre un module d'apprentissage (10), couplé de manière opérationnelle au module IA (8) et configuré pour entraîner le module IA (8) sur la base d'une approche d'apprentissage continu.

4. Système selon l'une quelconque des revendications précédentes, dans lequel le module IA (8) est un réseau neuronal comprenant : un certain nombre de cellules de réseau neuronal (42), chacune recevant des données d'entrée respectives et étant agencée selon une architecture récurrente ; et un étage d'attention (45), mettant en œuvre un algorithme d'attention sur des sorties reçues des cellules de réseau neuronal (42) pour fournir des valeurs reconstruites des signaux de surveillance d'état de sortie.

5. Système selon l'une quelconque des revendications précédentes, dans lequel les signaux de fonctionnement comprennent des signaux de couple et/ou de vitesse, de préférence les signaux de fonctionnement comprennent des dérivées correspondantes des signaux de couple et de vitesse.

6. Système selon l'une quelconque des revendications précédentes, dans lequel le module IA (8) est inclus dans une unité centrale de traitement (100) située dans un serveur distant, à distance de la machine d'emballage de récipients (2).

7. Ligne d'emballage (2'), comprenant le système de détection virtuelle (1), selon l'une quelconque des revendications précédentes.

8. Procédé mis en œuvre par ordinateur pour surveiller l'état d'une machine d'emballage de récipients (2) destinée à emballer des récipients remplis d'un produit alimentaire pouvant être versé, le procédé comprenant de reconstruire un signal de surveillance d'état cible, le signal de surveillance d'état cible étant un signal de vibration associé à des servomoteurs dans la machine d'emballage de récipients (2), sur la base de données d'entrée provenant de la machine d'emballage de récipients (2), les données d'entrée comprenant des signaux de fonctionnement associés aux servomoteurs dans la machine d'emballage de récipients (2) ; où la reconstruction comprend les étapes suivantes :
recevoir de la machine d'emballage de récipients (2) les données d'entrée qui sont indicatives du signal de surveillance d'état cible à reconstruire ; et
mettre en œuvre un algorithme d'apprentissage automatique pour générer un signal de surveillance d'état de sortie, qui est une reconstruction du signal de surveillance d'état cible, sur la base des données d'entrée ; et
fournir le signal de surveillance d'état de sortie généré par le module IA (8),
traiter ledit signal de surveillance d'état de sortie pour évaluer et/ou prédire un état de la machine d'emballage de récipients (2) sur la base du signal de surveillance d'état de sortie.

9. Procédé selon la revendication 8, comprenant en outre les étapes suivantes :
- acquérir des données d'entrée auprès de la machine d'emballage de conteneurs (2),
- acquérir un signal de surveillance d'état auprès d'un capteur de surveillance d'état physique (15) positionné au niveau de la machine d'emballage de récipients (2) ; et
- entraîner le module IA (8) sur la base des données d'entrée et du signal de surveillance d'état.

10. Procédé selon la revendication 8 ou la revendication 9, comprenant la mise en œuvre d'un pipeline d'apprentissage pour l'apprentissage du module IA (8), selon lequel l'apprentissage est divisé en deux phases consécutives :
une première phase d'apprentissage, dans laquelle le module IA (8) est configuré comme classificateur ; et
une deuxième phase d'apprentissage, dans laquelle le module IA (8) est configuré comme un régresseur, fournissant des valeurs de sortie réelles pour les signaux reconstruits.

11. Procédé selon la revendication 10, comprenant en outre les étapes suivantes :
- dans la première phase d'apprentissage du pipeline, mettre en œuvre un algorithme de classification, fournissant des résultats de classification qui sont utilisés pour ajuster les paramètres de l'algorithme d'apprentissage automatique, dans une phase de préformation du module IA (8),
- dans la deuxième phase d'apprentissage du pipeline, mettre en œuvre un algorithme de régression pour affiner les paramètres de l'algorithme d'apprentissage automatique.

12. Procédé selon l'une quelconque des revendications 8 à 11, comprenant d'évaluer la performance de l'algorithme d'apprentissage automatique en vérifiant si un signal de surveillance d'état provenant d'un capteur de surveillance d'état correspond sensiblement au signal de surveillance d'état de sortie généré par le module IA (8).

13. Procédé selon l'une quelconque des revendications 8 à 12, comprenant l'exploitation d'algorithmes conçus pour surveiller le fonctionnement et/ou la performance des machines d'emballage de récipients d'apprentissage (2) en fonction des données d'entrée, y compris un ou plusieurs modèles parmi des modèles de maintenance prédictive, des modèles de surveillance des performances, des modèles de contrôle de qualité et des modèles de contrôle de processus, pour fournir des étiquettes de données pour l'apprentissage du module IA (8).

14. Produit programme informatique comprenant des instructions qui, lorsque le programme est exécuté par une unité de calcul, amènent l'unité de calcul à exécuter le procédé selon l'une quelconque des revendications 8 à 13.
